# EUROPEAN PATENT APPLICATION

(11) **EP 1 746 078 A1**
(43) Date of publication of application: **24.01.2007**
(21) Application number: 05254503.5
(22) Date of filing: 20.07.2005
(51) Int. Cl.: C04B 41/89, C03C 17/34, G09F 13/20

(54) **Fired product having luminous function and evacuation route guiding sign device using fired product**

(71) Applicant: Universal Light Co., Ltd., Inagi-shi, Tokyo (JP)
(72) Inventor: Matsumoto, Gou, c/o Universal Light Co.Ltd., Tokyo (JP)
(74) Representative: Dixon, Philip Matthew

(57) **Abstract**

A fired product having a luminous function is manufactured by: adhering material-adapting glass frit to a surface of a ceramic material; adhering coating glass frit to the surface of the material-adapting glass frit after drying of the material-adapting glass frit; adhering luminous material particles having a particle size of 50 to 250 µm in one uniform layer to the coating glass frit layer before drying of the coating glass frit so that the upper portions of the luminous material particles are partly exposed from the coating glass frit; alternately stacking coating glass frit and luminous material particles several times; covering the topmost luminous material particles partly exposing from the coating glass frit by adhering coating glass frit; printing an image portion on the surface of the coating glass frit after drying of the coating glass frit; adhering adapting glass frit at a predetermined thickness to the coating glass frit having the printed image portion; uniformly adhering protecting glass frit particles having a large particle size to the surface of the adapting glass frit; and firing the adhered stack at high temperature, wherein the material-adapting glass frit has a coefficient of thermal expansion of an intermediate value between those of the ceramic material and the luminous material particles, the coating glass frit has a coefficient of thermal expansion substantially the same as that of the luminous material particles, and the adapting glass frit has a coefficient of thermal expansion of an intermediate value between those of the luminous material particles and the protecting glass frit particles having a large particle size. This fired product is used in an image forming part of an evacuation route guiding sign device as a fired product layer.

## Description

### 1. FIELD OF THE INVENTION

The present invention relates to methods for manufacturing fired products having luminous functions with good afterglow luminance and long afterglow time, and relates to fired products having the luminous functions. Furthermore, the present invention relates to evacuation route guiding sign devices using the fired products.

### 2. DESCRIPTION OF THE RELATED ART

In the ceramics industry, screen printing is broadly used for painting surfaces of fired products because of its easiness. With such an easy screen printing, mixtures of luminous material particles and glass frits are printed on surfaces of ceramic raw materials, and then the ceramic raw materials are fired at high temperature to obtain fired products having luminous functions. The fired products having luminous functions are used as, for example, evacuation route guiding sign members in subway premises.

Recent studies have revealed that afterglow luminance and afterglow time depend on a particle size of luminous material particles. Namely, afterglow luminance and afterglow time increase with an increase in the particle size of the luminous material particles.

In the screen printing, the particle size of particles to be used must be 20 to 30 µm. Therefore, luminous material particles used in the screen printing have a particle size of 20 to 30 µm. Thus, since the particle size of the luminous material particles used in the screen printing is small, substantial influence caused by a difference in a coefficient of thermal expansion of the luminous material particles does not occur even if the luminous material particles are fired as a mixture with the glass frit. Therefore, conventional processes can be advantageously utilized without any modification. However, the afterglow function is low because of the small particle size of the luminous material particles. When the mixture of the luminous material particles and the glass frit is printed on a surface of a fired product by the screen printing, the processes of screen printing and firing are repeated several times in order to increase the thickness of a layer of the luminous material particles. Thus, the amount of the luminous material particles is increased for enhancing the afterglow functions such as afterglow luminance and afterglow time.

The repetition of screen printing and firing for enhancing the afterglow functions requires time and effort, resulting in an increase of cost. Furthermore, since a particle size of luminous material particles is restricted, an improvement in the afterglow capability has limitations compared with that when luminous material particles having a large particle size are used. Therefore, even if an amount of the luminous material particles is increased, the afterglow capability cannot be dramatically improved. Additionally, crazing and peeling tend to occur with an increase in repetition of firing.

When the luminous material particles have a small particle size of 20 to 30 µm, oxidation degradation by firing tends to readily influence the luminous material particles due to the large surface area by volume. Therefore, the afterglow capability decreases. The oxidation degradation caused by firing can be prevented by increasing a ratio of the glass frit in the mixture of the luminous material particles and the glass frit. However, this decreases a ratio of the luminous material particles; thus, the afterglow capability cannot be improved. When a ratio of the glass frit is decreased and the luminous material particles are increased, the oxidation degradation by firing causes a drastic reduction in the afterglow capability.

On the other hand, as described above, the afterglow capability can be greatly improved by increasing a particle size of the luminous material particles. However, luminous material particles having a large particle size cannot be used for the conventional screen printing. Additionally, an increase in a particle size of the luminous material particles requires a thick stack to be fired. The large thickness causes an increase of influence of a coefficient of thermal expansion of the luminous material particles. Thus, crazing and peeling tend to occur, and mass production is difficult.

For example, Japanese Unexamined Patent Application Publication No. 2004-359480 discloses a method for forming thick layers of functional components except a glass component and then transferring a printed layer without peeling and breakage by firing after the transferring. In this technology, after the transferring, a laminate composed of a first glass layer, a functional layer, and a second glass layer in this order is transferred on a surface of a pottery to be an object of transfer so that the first glass layer is in contact with the surface of the pottery. Since the first glass layer is made of a glass component and does not contain any functional component, sufficient adhesion is obtained without peeling. Furthermore, since the second glass layer covers the first glass layer and the functional layer, breakage or peeling does not occur even if the functional layer is thick.

This known example has an advantageous effect that breakage or peeling caused by firing of the functional layer can be avoided by forming the functional layer thick. However, this technology is different from a technology that luminous material particles having a large particle size is used for increasing afterglow luminance and afterglow time.

Japanese Unexamined Patent Application Publication No. 10-194871 discloses a luminous paint (overglaze color having afterglow effect) made of a mixture of a lead-free frit and a binder.

However, this known example does not disclose a solution for peeling and crazing when the luminous paint is applied to a substrate used in firing.

Japanese Unexamined Patent Application Publication No. 2003-255869 discloses a method for providing a display member showing a luminous function with extremely high afterglow luminance at a low cost. In the display member, a luminous paint is applied to a substrate by forming an image portion on a back face of a translucent member, and forming a transparent adhesive layer on the back face corresponding to an outline-character portion or a transparent portion. A layer of luminous particles having a large particle size is stacked in one layer on the transparent adhesive layer. The back face of the luminous particles is covered with a transparent resin layer. A reflection layer is formed on the back face of the image portion or the outline-character portion, and a reflection sheet is adhered to the back face of the luminous particles and the reflection layer. A waterproof base sheet is adhered on the back face of the reflection sheet.

However, although this known example discloses the use of the luminous particles having a large particle size, a solution for peeling or crazing, which occurs when the luminous particles having a large particle size are formed into a sheet, is not disclosed.

Japanese Unexamined Patent Application Publication No. 2001-295231 discloses a device using a luminous material displaying an evacuation route guiding sign for pedestrians. The evacuation route guiding sign device can be simply manufactured and has sufficient endurance. The device has a structure that is formed by forming a downward flared recess on the front face of a metal rivet body and bringing a luminous ceramic-containing plastic piece into contact with the recess; or a structure that is formed by forming a recess on the front face and an inverted recess on the back face of a metal rivet body, bringing the recess and the inverted recess in communication with each other via a through-hole, and then bringing a luminous ceramic-containing plastic piece into contact with the recess, the inverted recess, and the through-hole.

However, in the sign device having the rivet, the adhesion between the luminous ceramic and the rivet body is poor. When the sign device is installed on a floor which is walked on, the rivet body is damaged and the fixation is loosened. Furthermore, water for cleaning the floor infiltrates in the recess of the rivet body. This causes peeling of the luminous ceramics.

In buildings, subway platforms, or the like, sign devices for guiding evacuation routes in case of earthquake and fire are installed. The sign devices are classified roughly to those having an emergency electric power source for self-generating light and others. However, even if a sign is self-luminous, the sign cannot be clearly seen in the dark and moreover in black smoke. Additionally, bending down and crawling on the floor are suggested in order to avoid breathing the smoke and toxic gases.

In such a posture of crawling on the floor, the sign installed at a high position cannot be readily seen. Consequently, there are many floors having tiles or sheets having drawn arrows or characters showing directions for evacuation.

The tiles having signs such as an arrow or characters can be constructed without problems. However, when the tiles are retrofitted, some tiles already constructed must be broken by a drill or the like in order to retrofit the tiles having drawn the signs. Therefore, it is a very troublesome task and takes a lot of time and cost.

When a sheet is applied on a floor, retrofitting can be readily performed. However, since a resin is used as a material for the sheet, the sheet is melted by the heat of fire. Therefore, the sheet does not function in such a case. Furthermore, the sheet has endurance problems. Namely, wear of the sheet proceeds when the sheet is applied on a passageway.

Luminous paint is applied to some of the tiles and sheets. However, in these conventional cases, the signs cannot be readily seen in the dark or in the smoke.

The conventional evacuation route guiding sign devices utilizing a luminous material are useless for the visually impaired. Therefore, such devices are insufficient as a safety measure.

At present, the following evacuation route guiding sign devices utilizing a luminous material (paint) are known.

Japanese Unexamined Patent Application Publication No. 8-312108 discloses an evacuation route guiding sign device visible in the dark, which is formed by opening an aperture in a tile carpet and incorporating a guide-displaying plate showing a guide mark using a luminous paint in the aperture.

However, since a resin is used as a raw material in this known example, the device may be melted by the heat of fire. Therefore, it may be useless for fire evacuation. When the device is installed on a floor, a difference in level on the floor is large. Furthermore, the device cannot be readily installed in a tile or concrete floor. In particular, the device cannot be retrofitted to subway platforms, steps, and passageways.

Japanese Unexamined Patent Application Publication No. 2004-163621 discloses a display sheet and floor mat capable of displaying a guide sign of an escape route by emission without using a power source even during a power outage, and of also changing the sign during a power outage different from that in normal state. In the display sheet and floor mat, a light-emitting display surface made of a luminous paint or luminous film is formed on a surface of a base material sheet, and a normal display surface is formed on a surface of a translucent sheet laminated on the base material sheet. For example, the light-emitting display surface works as the guide sign of an escape route, and the normal display surface works as a guide for transfer between lines or an advertisement. In lighted conditions, the normal display surface such as the guide for transfer between lines or the advertisement is displayed on the display sheet. In the dark during a power outage, the display is changed to the light-emitting display surface for guiding the escape route to an exit onto the ground.

However, this known example also has the same disadvantages as in Japanese Unexamined Patent Application Publication No. 8-312108.

### SUMMARY OF THE DISCLOSURE

There is disclosed a fired product having a large particle size and having a luminous function with good afterglow luminance and long afterglow time.

There is also disclosed a method for producing a fired-product layer having a luminous function by forming a luminous material layer on a substrate material by a firing technology. With this method, the peeling in the substrate material and the luminous material layer or the crazing in the luminous material layer can be prevented.

A further disclosure is a method for producing a fired-product layer having a luminous function. With this method, images such as characters and symbols can be accurately printed on a surface of the luminous material layer by screening printing or the like.

Within the extent of the present invention is a sign device which can tightly fix an evacuation route guiding sign board on a face, e.g. a floor or wall, to be mounted with the sign board. Furthermore, the sign device is highly load-bearing, and can prevent the invasion and residual of water or dust between a mounting plate and a luminous material.

The invention includes an evacuation route guiding sign device available to the visually impaired.

A first aspect of the present invention is achieved by adhering material-adapting glass frit to a surface of a ceramic material; adhering coating glass frit to the surface of the material-adapting glass frit after drying of the material-adapting glass frit; adhering luminous material particles having a particle size of 50 to 250 µm in one uniform layer to the coating glass frit layer before drying of the coating glass frit so that the upper portions of the luminous material particles are partly exposed from the coating glass frit; alternately stacking coating glass frit and luminous material particles several times; covering the topmost luminous material particles partly exposing from the coating glass frit by adhering coating glass frit; printing an image portion on the surface of the coating glass frit after drying of the coating glass frit; adhering adapting glass frit at a predetermined thickness to the coating glass frit having the printed image portion; uniformly adhering protecting glass frit particles having a large particle size to the surface of the adapting glass frit; and firing the adhered stack at high temperature. The material-adapting glass frit has a coefficient of thermal expansion of an intermediate value between those of the ceramic material and the luminous material particles, the coating glass frit has a coefficient of thermal expansion substantially the same as that of the luminous material particles, and the adapting glass frit has a coefficient of thermal expansion of an intermediate value between those of the luminous material particles and the protecting glass frit particles having a large particle size.

A second aspect of the present invention is achieved by adhering material-adapting glass frit to a surface of a metal plate; adhering coating glass frit to the surface of the material-adapting glass frit after drying of the material-adapting glass frit; adhering luminous material particles having a particle size of 50 to 250 µm in one uniform layer to the coating glass frit layer before drying of the coating glass frit so that the upper portions of the luminous material particles are partly exposed from the coating glass frit; alternately stacking coating glass frit and luminous material particles several times; covering the topmost luminous material particles partly exposing from the coating glass frit by adhering coating glass frit; printing an image portion on the surface of the coating glass frit after drying of the coating glass frit; adhering adapting glass frit at a predetermined thickness to the coating glass frit having the printed image portion; uniformly adhering protecting glass frit particles having a large particle size to the surface of the adapting glass frit; and firing the adhered stack at high temperature. The material-adapting glass frit has a coefficient of thermal expansion of an intermediate value between those of the metal plate and the luminous material particles, the coating glass frit has a coefficient of thermal expansion substantially the same as that of the luminous material particles, and the adapting glass frit has a coefficient of thermal expansion of an intermediate value between those of the luminous material particles and the protecting glass frit particles having a large particle size.

A third aspect of the present invention is the fired product having a luminous function produced according to first or second aspect of the present invention, wherein the image portion comprises an image for indicating an escape route.

A fourth aspect of the present invention is an evacuation route guiding sign device having a structure enable to be retrofitted to an existing floor, wall, or the like. The device includes a guiding sign-board with a guiding sign formed with a luminous paint in the central area and a mounting plate for mounting the guiding sign-board. The mounting plate includes a concave portion where the guiding sign-board is pressed in, a quadrangular frame surrounding the concave portion, a slope descending toward the edge from the periphery of the frame, and perforated holes for fixing bolts at at least four places of the frame.

A fifth aspect of the present invention is the evacuation route guiding sign device according to the fourth aspect of the present invention, wherein the guiding sign of the guiding sign-board has an arrow formed with a luminous paint, and the frame of the mounting plate has a chevron-shaped side so that the apex of the chevron is in the same direction as that of the arrow of the guiding sign-board.

A sixth aspect of the present invention is the evacuation route guiding sign device according to the fourth aspect of the present invention, wherein the frame of the mounting plate has two chevron-shaped sides opposing each other.

A seventh aspect of the present invention is the evacuation route guiding sign device according to the fourth aspect of the present invention, wherein the mounting plate has a rough bottom face to come into contact with a floor.

An eighth aspect of the present invention is the evacuation route guiding sign device according to the fourth aspect of the present invention, wherein the concave portion of the mounting plate has a window.

A ninth aspect of the present invention is the evacuation route guiding sign device according to the fourth aspect of the present invention, wherein the surface of the mounting plate or of the fired-product layer is provided with Braille or a raised symbol for indicating a direction of an escape route.

A tenth aspect of the present invention is the evacuation route guiding sign device according to the eighth aspect of the present invention, wherein the entire mounting plate is formed by press working of a stainless steel plate, and then the holes for fixing bolts and the window of the concave portion are formed.

A eleventh aspect of the present invention is an evacuation route guiding sign device including a sign plate having the top face provided with a fired-product layer having a luminous function, a first frame surrounding the fired-product layer, and a character, symbol, sign, or a combination thereof provided on or in the top surface of the fired-product layer; a mounting plate having a second frame raised upward and an opening surrounded by the second frame, wherein the sign plate is incorporated in the mounting plate by inserting the sign plate in the mounting plate from the bottom, exposing the fired-product layer from the opening, and bringing the first frame surrounding the fired-product layer into contact with the second frame; and an anchor bolt for fixing the sign plate and the mounting plate to a face to be mounted with the device via bolt holes perforated in the second frame of the mounting plate and in the first frame of the sign plate.

A twelfth aspect of the present invention is the evacuation route guiding sign device according to the eleventh aspect of the present invention, further including an absorbing mat provided on the bottom face of the sign plate, wherein the mounting plate is fixed to a face to be mounted with the device so that the absorbing mat is interposed between the sign plate and the face to be mounted with the device.

A thirteenth aspect of the present invention is the evacuation route guiding sign device according to the eleventh or twelfth aspect of the present invention, wherein the sign plate and the mounting plate are in one unit by previously adhering the surface of the first frame of the sign plate and the surface of the second frame of the mounting plate with an adhesive.

A fourteenth aspect of the present invention is the evacuation route guiding sign device according to the twelfth or thirteenth aspect of the present invention, wherein the absorbing mat and the sign plate are in one unit by adhering the absorbing mat and the bottom face of the sign plate with an adhesive.

A fifteenth aspect of the present invention is the evacuation route guiding sign device according to any one of twelfth to fourteenth aspects of the present invention, wherein the bottom face of the absorbing mat is provided with a pressure-sensitive adhesive layer with peelable paper.

A sixteenth aspect of the present invention is the evacuation route guiding sign device according to any one of eleventh to fifteenth aspects of the present invention, wherein the mounting plate has an arrow-shaped side for indicating the direction of an escape route.

A seventeenth aspect of the present invention is the evacuation route guiding sign device according to any one of eleventh to sixteenth aspects of the present invention, wherein the surface of the mounting plate or of the fired-product layer is provided with Braille for indicating the direction of an escape route so that the visually impaired safely escapes according to the indication of the Braille.

According to first aspect of the present invention, the occurrence of crazing and peeling caused by using luminous material particles having a large particle size in the firing process can be prevented, and also a decrease of the afterglow function can be inhibited to a minimum by reducing oxidation degradation of the luminous material particles. Thus, the afterglow function can be enhanced by using the luminous material particles having a large particle size. Additionally, the afterglow luminance can be enhanced even if the luminous material particles is a single layer, but a plurality of layers of the luminous material particles is stacked in the present invention to further enhance the afterglow luminance. This is considered that the luminous material particles are not spherical but are irregular in shape, so that sunlight and artificial light can pass through the gaps formed between luminous material particles.

According to the second aspect of the present invention, the luminous material particles can be immobilized on a metal plate of which the coefficient of thermal expansion is largely different from that of a ceramic material, so that the excellent capabilities, which the ceramic material does not have, of the metal plate can be utilized, in addition to the above-mentioned effects.

According to the third aspect of the present invention, the afterglow capabilities such as afterglow luminance and afterglow time can be improved compared with known evacuation route guiding sign members made of fired products.

According to any of fourth to tenth aspect of the present invention, the guiding sign device using the luminous material can be retrofitted to a floor or wall. The effects are as follows:
1. Since the device can be retrofitted to a floor, the execution of works is simple and the cost for the execution is low.
2. Since a difference in level is small, the device does not disturb pedestrians and transports.
3. Since the fore of the mounting plate (the direction of the arrow on the guiding sign-board) is in a chevron shape, the direction indicated by the arrow can be highlighted to be readily recognized. Thus, the functionality is improved, and the design is good. Additionally, by providing the mounting plate with two chevron-shaped sides opposing each other, the guiding sign-board can be adhered to the mounting plate without any attention to which is the front side.
4. Since the bolt-holes for fixing the device are formed at at least four positions, the mounting plate can be tightly fixed to a floor.
5. Since the frame of the mounting plate has a slope, the difference in level is buffered.
6. Since the concave portion has the window, water penetrated in the concave can be drained from this window.
7. Since the frame of the mounting plate or the guiding sign-board is provided with Braille, the visually impaired can be efficiently guided.
8. Since the mounting plate has the rough bottom face, foreign substances can be absorbed with this rough bottom face so that the device is in good contact with a floor.

According to any of eleventh to seventeenth aspect of the present invention, the evacuation route guiding sign device using the luminous material can achieve the following effects.
1. According to the eleventh aspect of the present invention, since the sign plate is incorporated in the mounting plate through the second frame of the mounting plate and fixed to a floor with the anchor bolts, the device is greatly improved to be resistive to shocks or stepping on, to be robust and durable compared with an example that a sign plate with a luminous paint layer is incorporated to a surface of a concave portion of a mounting plate.
2. According to the eleventh aspect of the present invention, since the bolt-holes are also provided to the sign plate to fix the sing plate to a floor with the anchor bolts together with the mounting plate, the sign plate is free from rattling.
3. According to the eleventh aspect of the present invention, since the device can be readily fixed on a floor, adaptability is high. Additionally, when the sign plate is required to be changed or the luminous paint layer is damaged or worn, the sign plate can be changed to a new one by unloosing the bolts to remove the mounting plate.
4. According to the twelfth aspect of the present invention, shocks applied to the sign plate is absorbed by the function of the absorbing mat so that the operating-life of the sign plate is extended. Additionally, the absorbing mat can absorb roughness and deformation of the floor to enhance the adhesion.
5. According to the thirteenth and fourteenth aspects of the present invention, since the sign plate and the mounting plate and also the absorbing mat can be in one unit, not only the transport of the device but also the assembling of the device on site can be improved.
6. According to the fifteenth aspect of the present invention, since the sign plate or the absorbing mat can be readily adhered to a floor by peeling the peelable paper on site, the troubles of preparing an adhesive and applying the adhesive on site can be avoided.
7. According to the sixteenth aspect of the present invention, since the shape of the mounting plate itself indicate the direction of an escape route, the functionality as a sign is improved.
8. According to the seventeenth aspect of the present invention, since the visually impaired can know the direction of an escape route by touching Braille, for example, when the visually impaired crawls on a floor for escape, the device is also effective for the visually impaired.
The scope of the invention is defined in the claims.

### BRIEF DESCRIPTION OF THE DRAWINGS

Fig. 1 is a cross-section view of a stack which becomes a fired product having a luminous function by firing, according to an embodiment of the present invention.
Fig. 2 is a cross-section view of the fired product having a luminous function produced by firing, according to an embodiment of the present invention.
Fig. 3 is a plan view of an evacuation route guiding sign member, according to an embodiment of the present invention.
Fig. 4, A to L, shows a manufacturing process, according to an embodiment of the present invention.
Fig. 5 is an explanatory drawing of a state in which a guiding sign-board is fixed on a floor with a mounting plate according to the present invention.
Fig. 6 is a plan view of a mounting plate fitted with a guiding sign-board.
Fig. 7 is a cross-section view taken along the line B-B' of Fig. 6.
Fig. 8 is a plan view of a mounting plate before being fitted with a guiding sign-board.
Fig. 9 is a cross-section view taken along the line C-C' of Fig. 8.
Fig. 10 is a plan view of a mounting plate provided with Braille.
Fig. 11 is a partial cross-section view of a mounting plate having a rough bottom face.
Fig. 12 is an explanatory drawing of a state in which sign devices according to the present invention are fixed on a floor.
Fig. 13 is an explanatory drawing of a sign plate, a mounting plate, and an anchor bolt.
Fig. 14 is an enlarged cross-section view taken along the line B-B' of Fig. 12.
Fig. 15 is an explanatory drawing of an absorbing mat.
Fig. 16 is an explanatory drawing of a case in which the absorbing mat is used.
Fig. 17 is an explanatory drawing of a state in which a peelable paper of a pressure-sensitive adhesive layer, which is formed on a bottom face of a sign plate or the absorbing mat, is peeled off.

### REFERENCE NUMERALS

- 1:: Ceramic material
- 2:: Metal plate
- 3:: Material-adapting glass frit
- 4:: Coating glass frit
- 5:: Luminous material particles
- 6:: Image portion
- 7:: Adapting glass frit
- 8:: Protecting glass frit particles
- 9:: Evacuation route guiding sign member
- 100:: Mounting plate
- 101:: Frame
- 102:: Concave portion for being fitted with a guiding sign-board
- 103:: Window
- 104:: Chevron
- 111:: Guiding sign-board
- 115:: Braille
- 116:: Rough bottom face
- 200:: Sign device
- 201:: Display plate
- 202:: Stainless steel plate
- 203:: Luminous paint layer
- 204:: Arrow
- 205:: First frame
- 206:: Bolt-hole
- 207:: Mounting plate
- 208:: Second frame
- 209:: Opening
- 210:: Bolt-hole
- 211:: Chevron shaped side
- 212:: Anchor bolt
- 213:: Absorbing mat
- 214:: Bolt-hole
- 215:: Peelable paper
- 216:: Adhesive layer
- 217:: Braille

### EXAMPLE 1

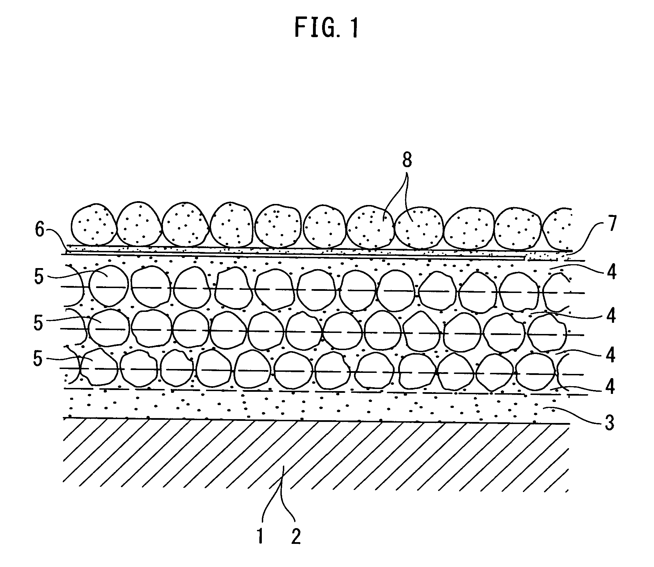

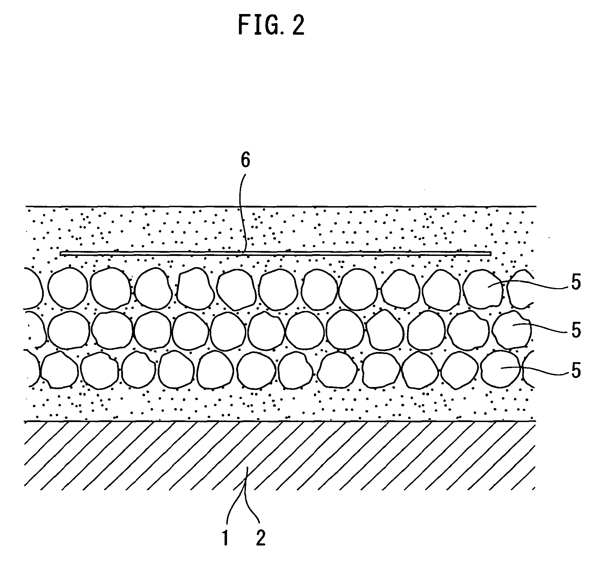

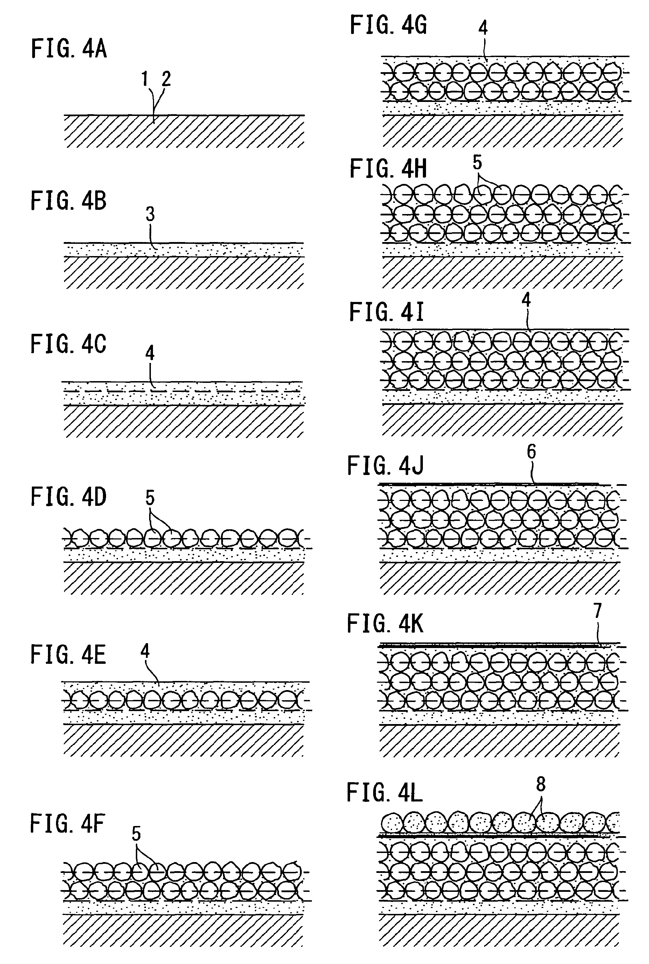

With reference to Figs. 1 to 4, material-adapting glass frit 3 is adhered on a surface of a plate-shaped ceramic material 1 or a metal plate 2 by screen printing or spray coating. The material-adapting glass frit 3 is adhered so as to cover the whole surface of the ceramic material 1 or the metal plate 2 with a uniform thickness of, for example, 100 to 200 µm, preferably, 150 µm. The difference in coefficient of thermal expansion between the ceramic material 1 and luminous material particles 5 or between the metal plate 2 and the luminous material particles 5 can be alleviated by increasing the thickness of the material-adapting glass frit 3.

Examples of the materials for the ceramic material 1 include glass, tiles, and ceramics. Examples of the materials for the metal plate 2 include iron, stainless steel, and copper. The ceramic material 1 is less affected by expansion caused by firing than the metal plate 2, and is corrosion-free. On the other hand, the metal plate 2 has strength to be durable and not to break, unlike the ceramic material 1 is. Furthermore, the metal plate 2 can have a small thickness not to be bulky compared with the ceramic material 1 which needs a certain thickness. Therefore, products using the metal plate 2 can be transported several times more than products using the ceramic material 1.

The material-adapting glass frit 3 functions to improve the adhesion between the ceramic material 1 and the luminous material particles 5 or between the metal plate 2 and the luminous material particles 5, and functions to alleviate the difference in coefficient of thermal expansion between the ceramic material 1 and the luminous material particles 5 or between the metal plate 2 and luminous material particles 5. The coefficient of thermal expansion of the material-adapting glass frit 3 is controlled at an intermediate value between those of the ceramic material 1 and the luminous material particles 5 or between those of the metal plate 2 and the luminous material particles 5.

The material-adapting glass frit 3 is made by melting a mixture of, for example, silica, feldspar, and alumina at a high temperature, rapidly cooling the melt for solidifying, and then pulverizing into powder. The material-adapting glass frit 3 is in powder form and has a particle size of, for example, about 10 µm so that screen printing can be utilized.

The coefficient of thermal expansion of the material-adapting glass frit 3 can be controlled by changing a mixture ratio of feldspar and alumina. The coefficient of thermal expansion can be decreased by increasing the ratio of alumina, and can be increased by increasing the ratio of feldspar.

The material-adapting glass frit 3 is mixed with a dissolving agent such as squeegee oil into a liquid state so as to easily adhere to the surface of the ceramic material 1 or the metal plate 2, and is then applied to the surface of the ceramic material 1 or the metal plate 2. The squeegee oil mixed with the material-adapting glass frit 3 is vaporized during a firing process afterward.

The material-adapting glass frit 3 is white or transparent. When the surface of the ceramic material 1 or the metal plate 2 is not white, the material-adapting glass frit 3 is white. When the ceramic material 1 or the metal plate 2 is white, the material-adapting glass frit 3 is transparent. This is because that the afterglow luminance is low when the surface of the ceramic material 1 or the metal plate 2 is not white. The white material-adapting glass frit 3 is prepared by adding, for example, titanium to the above-mentioned materials.

The material-adapting glass frit 3 having a thickness of, for example, 150 µm is uniformly adhered on the whole surface of the ceramic material 1 or the metal plate 2, and then the surface is dried. Coating glass frit 4 is adhered on the surface of the dried material-adapting glass frit 3 by screen printing or spray coating. The coating glass frit 4 is adhered so as to cover the whole surface of the material-adapting glass frit 3 with a uniform thickness of about a half of the particle size of the luminous material particles 5, e.g. 50 to 100 µm.

The coating glass frit 4 surrounds the luminous material particles 5 to prevent the oxidation degradation caused by firing. The coating glass frit 4 also works like an adhesive, so the luminous material particles 5 can be readily adhered in one layer. Furthermore, the coating glass frit 4 and the luminous material particles 5 are vitrified during the firing process. The coating glass frit 4 is controlled to have a coefficient of thermal expansion substantially the same as that of the luminous material particles 5 not to be peeled from the luminous material particles 5 during the firing process.

The coating glass frit 4 is made by melting a mixture of, for example, silica, feldspar, and alumina at a high temperature, rapidly cooling the melt for solidifying, and then pulverizing into powder, as in the material-adapting glass frit 3. The coating glass frit 4 is in powder form and has a particle size of, for example, about 10 µm so that screen printing can be utilized.

The coefficient of thermal expansion of the coating glass frit 4 can be controlled by changing a mixture ratio of feldspar and alumina. The coefficient of thermal expansion can be decreased by increasing the ratio of alumina, and can be increased by increasing the ratio of feldspar. The coefficient of thermal expansion of the coating glass frit 4 is controlled to substantially the same as that of the luminous material particles 5.

The coating glass frit 4 is mixed with a dissolving agent such as squeegee oil into a liquid state so as to easily adhere to the surface of the material-adapting glass frit 3 which have been dried, and is then applied to the surface of the dried material-adapting glass frit 3. The squeegee oil mixed with the coating glass frit 4 is vaporized during a firing process afterward. The coating glass frit 4 is transparent so as to allow light to pass through.

The coating glass frit 4 is adhered to the surface of the material-adapting glass frit 3 at a thickness of about a half of the particle size of the luminous material particles 5, for example, 100 µm. Before the surface of the adhered coating glass frit 4 dries, the luminous material particles 5 having a particle size larger than the thickness of the coating glass frit 4, for example, 200 µm are uniformly adhered on the coating glass frit 4 so that the luminous material particles 5 are arranged in one layer and that the upper portions of the luminous material particles 5 are partly exposed from the coating glass frit 4. The luminous material particles 5 are not spherical but are irregular in shape.

The thickness of the coating glass frit 4 is controlled at about a half of the particle size of the luminous material particles 5 in order to arrange the luminous material particles 5 in one layer. When the thickness of the coating glass frit 4 is increased, a part of the luminous material particles 5 buries completely in the thick coating glass frit 4 while another part of the luminous material particles 5 is adhered to adjacent to the surface of the coating glass frit 4. As a result, the adhesion surfaces of the luminous material particles 5 are not arranged in one uniform layer.

When the thickness of the coating glass frit 4 is about a half of the particle size of the luminous material particles 5, the luminous material particles 5 bury in the coating glass frit 4 by a depth of the thickness of the coating glass frit 4 and come into contact with the surface of the material-adapting glass frit 3 under the coating glass frit 4 so that the luminous material particles 5 do not sink anymore. As a result, the luminous material particles 5 can be adhered in one uniform layer.

The adhesion of the luminous material particles 5 are performed by: for example, uniformly dispersing the luminous material particles 5 in powder form over the surface of the coating glass frit 4 which is not dried; and then uniformly adhering the luminous material particles 5 to the surface of the coating glass frit 4 by tilting the plate-shaped ceramic material 1 or the metal plate 2, or by blowing air on areas where the luminous material particles 5 are partially aggregated. Since the surface of the coating glass frit 4 which is not dried has an adhesion function, the luminous material particles 5 being contact with the surface of the coating glass frit 4 are adhered by this adhesion function.

Luminous material particles 5 which are dispersed on the luminous material particles 5 and do not come into contact with the coating glass frit 4 are transferred to another area of the coating glass frit 4 to be adhered or removed from the surface of the ceramic material 1 or the metal plate 2 by tilting the plate-shaped ceramic material 1 or the metal plate 2 or by blowing air on the surface.

The luminous material particles 5 are made of alkaline earth aluminate luminous phosphors, such as SrAl₂O₄:Eu²⁺, Dy³⁺, which have chemically and optically excellent properties.

The luminous material particles 5 have properties to absorb sunlight and artificial light, and emit the light in the dark. Therefore, guiding signs utilizing their afterglow luminance can be used for emergency such as a power outage in underground malls or the like. In this case, the higher the afterglow luminance is the better. In the present invention, the afterglow capability is enhanced by making it possible to use the luminous material particles 5 having a large particle size in a fired product.

It is known that the initial intensity of the afterglow increases with the particle size of the luminous material particles 5. However, when the particle size is too large, crazing or peeling occurs during firing. Therefore, not only the physical appearance is bad but also the products have no value. The particle size suitable for firing is 50 to 250 µm.

For example, as in the above description, the luminous material particles 5 having a particle size of 200 µm are adhered to the surface of the coating glass frit 4 in one uniform layer. After drying the coating glass frit 4, the next coating glass frit 4 of the same components is adhered to the luminous material particles 5 by screen printing or spray coating. This coating glass frit 4 is mixed with squeegee oil as the dissolving agent, as in the above.

In this step, the coating glass frit 4 is adhered enough to completely cover the whole luminous material particles 5 on the first coating glass frit 4. When the next luminous material particles 5 are further adhered to the second coating glass frit 4, the second coating glass frit 4 has a thickness so that the next luminous material particles 5 do not bury in the coating glass frit 4, as in the above.

Therefore, if the luminous material particles 5 have a particle size of 200 µm, the second coating glass frit 4 should have a thickness of about 200 µm. Namely, the thickness from the top faces of the luminous material particles 5 to the surface of the second coating glass frit 4 is about 100 µm.

Before the second coating glass frit 4 covering the luminous material particles 5 dries, the next luminous material particles 5 are adhered in one uniform layer by, for example, dispersing the luminous material particles 5 on the surface of the second coating glass frit 4, as in the above.

Similarly, for example, three layers of the luminous material particles 5 are stacked and dried. Then, coating glass frit 4 is uniformly stacked so as to cover the whole topmost luminous material particles 5.

As described above, the luminous material particles 5 are not spherical but are irregular in shape. Therefore, gaps are formed between each luminous material particle even if the luminous material particles 5 are arranged in one uniform layer. Consequently, light can pass through a plurality of layers, for example, three layers of the luminous material particles 5.

In order to stack a plurality of layers, all layers of the coating glass frit 4 are made of the same components and have the same coefficient of thermal expansion. Similarly, all layers of the luminous material particles 5 are made of the same components and have the same coefficient of thermal expansion. Additionally, all of the coating glass frits 4 are mixed with a dissolving agent such as squeegee oil so that the adhesion is easily performed. The squeegee oil is vaporized during a firing process afterward, as described above.

After the topmost coating glass frit 4 is dried, an image portion 6 which has desired symbols, characters, and marks is formed by printing, for example, a mixture of inorganic pigment and squeegee oil on the surface of the dried topmost coating glass frit 4 by screen printing or the like.

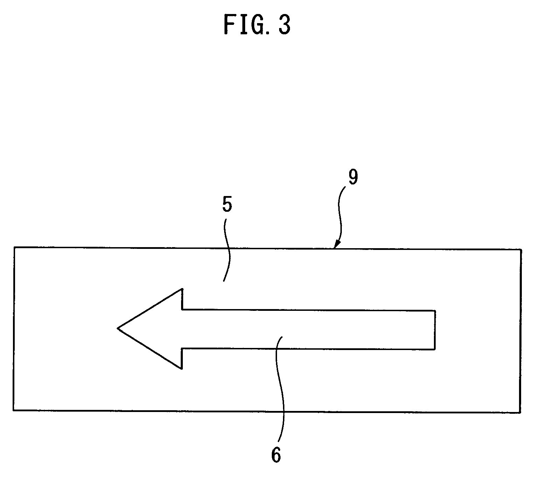

As shown in Fig. 3, an evacuation route guiding sign member 9 made of a fired product having a luminous function includes the image portion 6 having an arrow or a symbol indicating an escape route, characters such as "EMERGENCY DOOR" or "EXIT", and the like. These signs are printed with a green pigment.

A portion of the luminous material particles 5 under the image portion 6 is not seen from the surface of the evacuation route guiding sign member 9, but the other portion of the luminous material particles 5 can be seen as afterglow. Therefore, the afterglow of the luminous material particles 5 can be seen as the background of the image portion 6 or, reversely, can be seen as the signs when the background is formed as the image portion 6.

Adapting glass frit 7 is adhered to the surface of the topmost coating glass frit 4 printed the image portion 6 by screen printing or spray coating. The adapting glass frit 7 is adhered to cover the whole surface of the topmost coating glass frit 4 with a uniform thickness of, for example, 20 µm.

The adapting glass frit 7 functions to alleviate the difference in coefficient of thermal expansion between the luminous material particles 5 and protecting glass frit particles 8 having a large particle size. The coefficient of thermal expansion of the adapting glass frit 7 is controlled at an intermediate value between those of the luminous material particles 5 and the protecting glass frit particles 8 having a large particle size.

The adapting glass frit 7 is made by melting a mixture of, for example, silica, feldspar, and alumina at a high temperature, rapidly cooling the melt for solidifying, and then pulverizing into powder, as in the material-adapting glass frit 3 and the coating glass frit 4. The adapting glass frit 7 is in powder form and has a particle size of, for example, about 10 µm so that screen printing can be utilized.

The coefficient of thermal expansion of the adapting glass frit 7 can be controlled by changing a mixture ratio of feldspar and alumina. The coefficient of thermal expansion can be decreased by increasing the ratio of alumina, and can be increased by increasing the ratio of feldspar. The coefficient of thermal expansion of the adapting glass frit 7 is controlled at an intermediate value between those of the luminous material particles 5 and the protecting glass frit particles 8 having a large particle size.

The adapting glass frit 7 is mixed with a dissolving agent such as squeegee oil into a liquid state so as to easily adhere to the surface of the coating glass frit 4 which has been dried, and is then applied to the surface of the dried coating glass frit 4. The squeegee oil mixed with the adapting glass frit 7 is vaporized during a firing process afterward. The adapting glass frit 7 is transparent so as to allow light to pass through.

The protecting glass frit particles 8 having a large particle size of, for example, 200 µm or more are uniformly adhered to the surface of the adapting glass frit 7. The protecting glass frit particles 8 function as a protecting layer for the luminous material particles 5. In general, the protecting layer is formed by firing the protecting glass frit particles several times. However, by using the glass frit particles having a large particle size, the protecting layer can be formed by firing once or twice. Significant reduction of time and effort can be expected by reducing the frequency of the firing process from several times to once or twice. Furthermore, crazing and peeling which tend to occur during firing can be decreased by reducing the frequency of the firing process.

Then, the stacked product is fired at 600°C to 900°C, depending on the material. The squeegee oil mixed in the material-adapting glass frit 3, the coating glass frit 4, or the adapting glass frit 7 is vaporized during the firing process. The glass frit is vitrified at 500°C to 600°C, and the luminous material particles 5 and the glass are vitrified at 700°C to 900°C.

With the above-mentioned processes, the luminous material particles 5 are fired and vitrified on the surface of the plate-shaped ceramic material 1 or the metal plate 2. Thus, a fired product having luminous functions can be produced.

Afterglow luminance of the fired product having luminous functions manufactured according to the present invention was compared with that of the competitor's products. The results are shown in Table 1. It is observed that the afterglow luminance is improved to the double or more of those of the competitor's products. The particle size of the luminous material particles used in this Example was 150 µm.

**Table 1: Luminous capability comparison between the product of the present invention and competitor's products.**

| | Afterglow luminance (mcd/m²) | | | |
|---|---|---|---|---|
| | 5 minutes | 10 minutes | 20 minutes | 60 minutes |
| Product of the present invention | 671 | 378 | 193 | 57 |
| Product of A company | 276 | 152 | 79 | 23 |
| Product of B company | 273 | 143 | 72 | 23 |
| Product of C company | 90 | 56 | 32 | 11 |
| Product of D company | 241 | ? | 70 | 19 |

It is to be understood that the present invention is not limited to the best mode for carrying out the invention described above and encompasses all possible variation which could be made without departing from its scope as defined in the claims.

### EXAMPLE 2

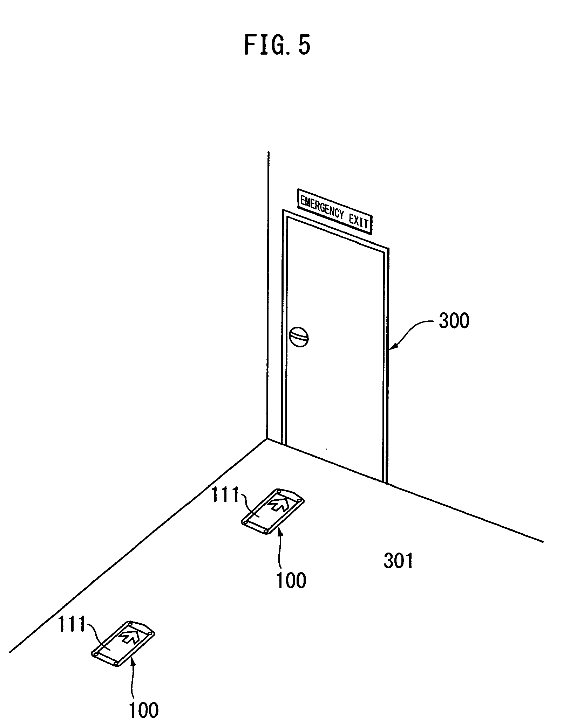

With reference to Figs. 5 to 11, Example 2 according to the present invention will now be described in detail.

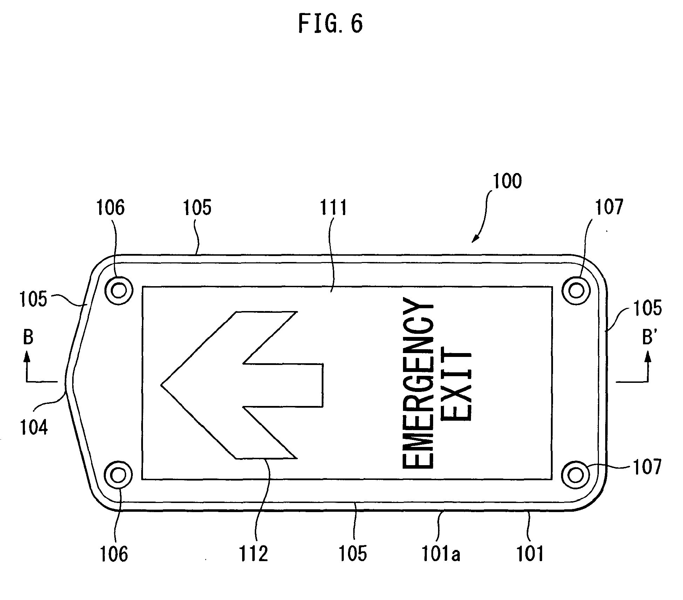

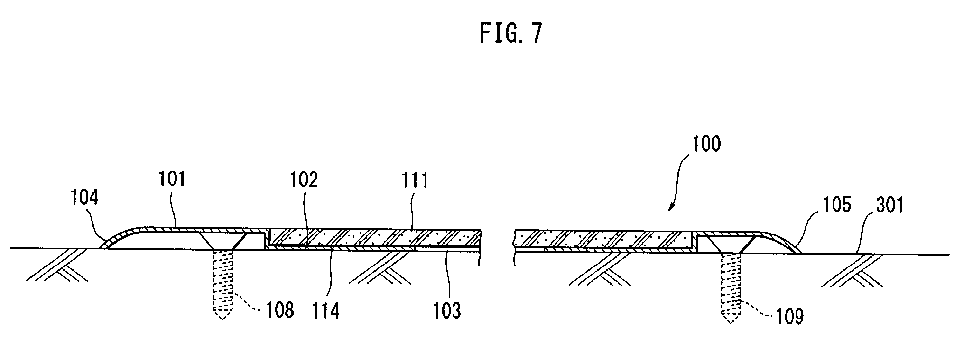

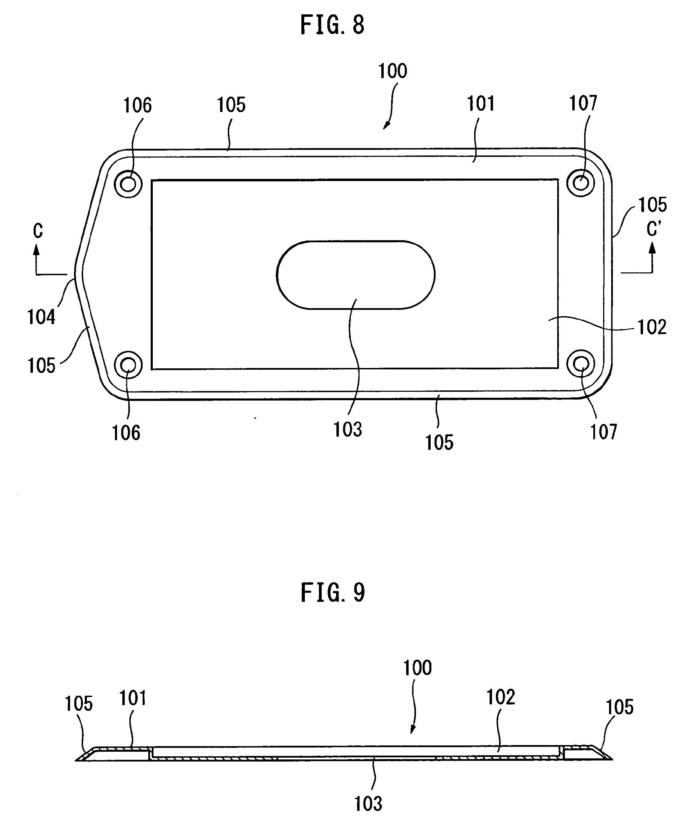

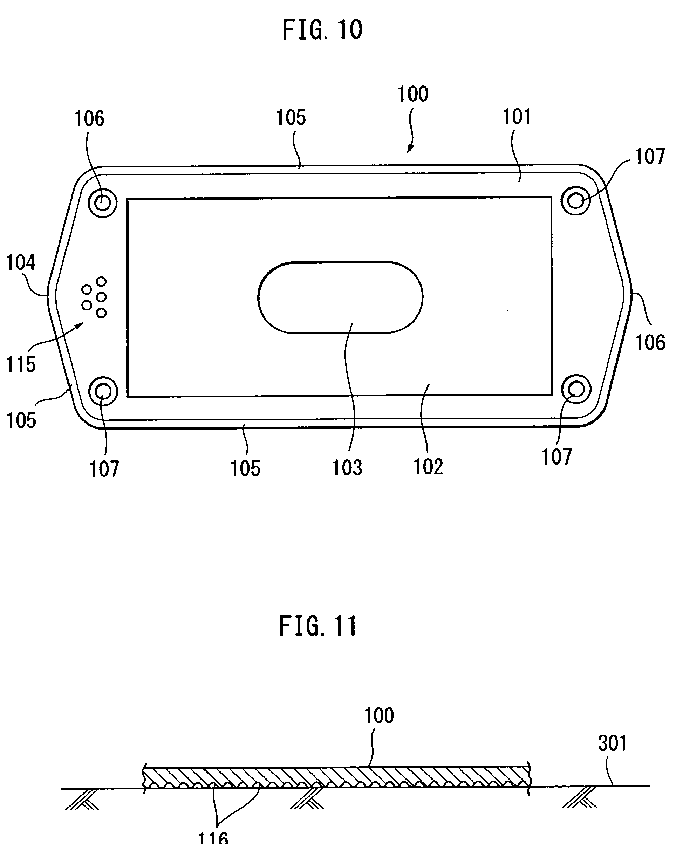

Fig. 5 shows a state in which an evacuation route guiding sign device according to the present invention is retrofitted on a floor 301 so as to indicate the direction to an emergency exit 300. Fig. 6 is a plan view showing the entire evacuation route guiding sign device. Fig. 7 is an enlarged cross-section view taken along the line B-B' of Fig. 6. Fig. 8 is a plan view of a mounting plate. Fig. 9 is a cross-section view taken along the line C-C' of Fig. 8. Fig. 10 is a plan view of a mounting plate provided with Braille. Fig. 11 is an explanatory drawing of a mounting plate having a rough bottom face.

In the drawings, reference numeral 100 denotes a mounting plate for the evacuation route guiding sign device. The mounting plate 100 is a flat rectangle with a short side having a chevron 104. As shown in Fig. 10, the chevron 104 may be formed at both sides. Reference numeral 102 denotes a concave portion for being fitted with a guiding sign-board. The concave portion 102 is a flat rectangle formed in the central part of the mounting plate 100. As shown in Figs. 8 and 9, the concave portion 102 has an oval window 103 at the center.

The mounting plate 100 has a frame 101 between the concave portion 102 and the edge 101a of the mounting plate 100, and has a slope 105 at the periphery of the frame 101 gently descending toward the edge 101a.

Reference numerals 106 and 107 denote bolt-holes (countersink) for fixing the mounting plate 100 on a floor. In this Example, the bolt-holes are provided at four corners of the frame 101. The number of the bolt-holes depends on a size of the mounting plate 100. When the bolt-holes are provided at two places only, the strength is insufficient. Therefore, the bolt-holes are preferably provided at three or more places.

Anchor bolts 108 and 109 are driven into the floor 301 via the bolt-holes 106 and 107.

Reference numeral 111 denotes a guiding sign-board with a top surface having an arrow 112 and characters 113 of EMERGENCY EXIT which are formed by firing of luminous paint. The guiding sign-board 111 is placed in the concave portion 102 of the mounting plate 100. The bottom face of the guiding sign-board 111 and the surface of the concave portion 102 are bonded with an epoxy resin adhesive 114.

With reference to Fig. 10, the frame 101 is provided with guiding Braille 115 at the side having the chevron 104. The visually impaired can recognize the direction of the evacuation route by touching the guiding Braille 115. The guiding Braille 115 may be also provided on the guiding sign-board 111, in addition to the frame 101.

With reference to Fig. 11, the mounting plate 100 has a rough bottom face 116. The rough bottom face 116 functions to bring the mounting plate 100 into firm and planar contact with the floor 301 even if foreign substances such as sands are present between the floor 301 and the bottom face of the mounting plate 100.

The mounting plate 100 of this Example is formed by press working of a stainless steel plate (SUS304) having a thickness of 1.00 mm so as to have a length of 276.53 mm, a width of 130 mm, and a height of 3.5 mm. The angle of the slope 105 is 30°, the radius R of the corner is 25 mm. The guiding sign-board 111 has a length of 270 mm and a width of 97 mm. The window 103 has a length of 80 mm and a width of 36 mm.

### EXAMPLE 3

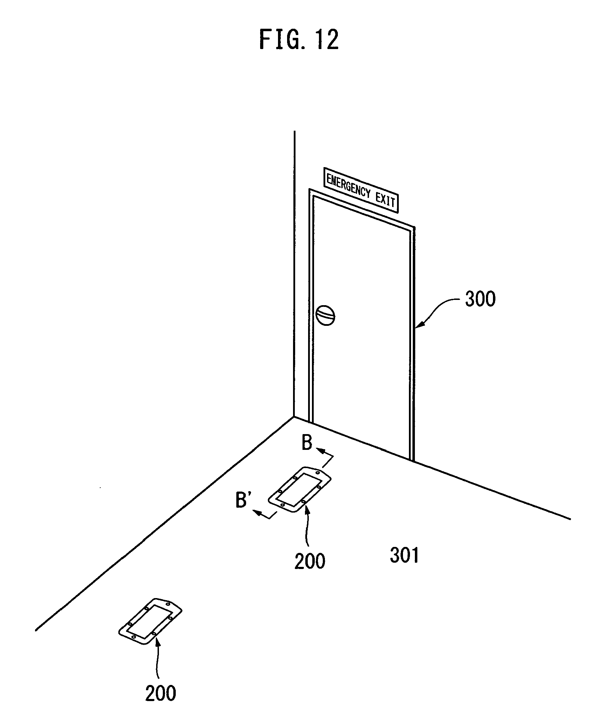

With reference to Figs. 12 to 17, an example of an evacuation route guiding sign device (referred to as sign device hereinafter) according to the present invention will be described in detail.

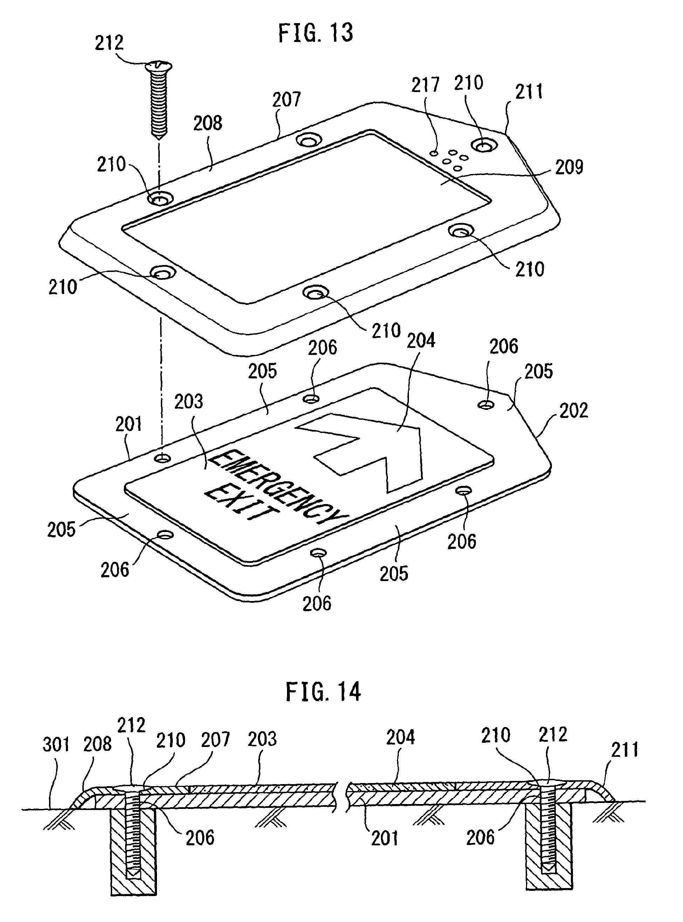

Fig. 12 is an explanatory drawing of a state in which sign devices 200 are fixed on a floor 301 at a certain interval toward an emergency exit 300. Fig. 13 is an exploded perspective view of the sign device 200. Fig. 14 is an enlarged cross-section view taken along the line B-B' of Fig. 12.

In Figs. 12 to 14, a display plate 201 of the sign device 200 has a luminous paint (pigment) layer 203 formed by firing on a surface of a quadrangular stainless steel plate 202, a sign of an arrow 204 for indicating an evacuation route on the surface, and a first frame 205 having a certain width and surrounding the luminous paint layer 203. The first frame 205 has six bolt-holes 206.

A mounting plate 207 is formed by press working of a stainless steel plate. The mounting plate 207 has a quadrangular second frame 208 which is slightly raised, and has an opening 209 for exposing the luminous paint layer 203. The second frame 208 surrounds the opening 209. The second frame 208 is provided with bolt-holes (countersink) 210. The fore part (the direction which is indicated by the arrow 204) of the second frame 208 of the mounting plate 207 is formed in a chevron shape 211 so as to correspond to the direction of the arrow 204; thus, the evacuation route is also indicated by the shape of the mounting plate 207 itself.

In Fig. 13, only one anchor bolt 212 is drawn, but the number of the anchor bolts is the same as that of the bolt-holes 210.

In Example 3, each number of the bolt-holes 206 of the display plate 201, of the bolt holes 210 of the mounting plate 207, and of the anchor bolts 212 is six. However, the number can be increased or decreased according to sizes of the display plate 201 and the mounting plate 207.

Fig. 14 is a state in which the sign device 200 is fixed on a floor 301. The second frame 208 holds the first frame 205, and the luminous paint layer 203 is exposed from the opening 209 to the surface. The display plate 201 is tightly fixed to the floor 301 by the anchor bolts 212 in the mounting plate 207.

In Example 3, the display plate 201 and the mounting plate 207 are assembled into a structure shown in Fig. 14 on site. However, the display plate 201 and the mounting plate 207 may be previously adhered into one unit by applying an adhesive between the first frame 205 of the display plate 201 and the second frame 208 of the mounting plate 207, so that the transport and assembling on site are readily performed.

### EXAMPLE 4

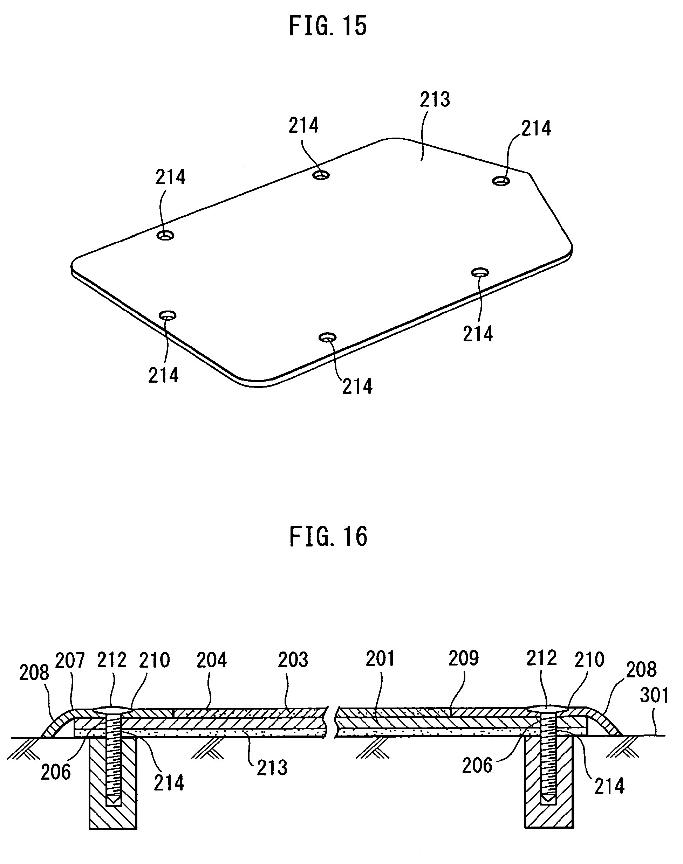

In a sign device 200 of Example 4, as shown in Fig. 16, an absorbing mat 213 is disposed between the display plate 201 and a floor 301. As shown in Fig. 15, the absorbing mat 213 is provided with bolt-holes 214 at six places. The absorbing mat 213 absorbs roughness and deformation of the floor 301 to enhance the adhesion when the sign device 200 is fixed in the floor 301, and also absorbs impact and load from above to prevent loosening and damaging of the luminous paint layer 203 and the mounting plate 207. This Example corresponds with the fourteenth aspect of the present invention.

As shown in Fig. 15, the absorbing mat 213 in Example 4 is formed by cutting a rubber plate into the same size and shape as the display plate 201, and perforating bolt-holes 214 at the same positions as those in the display plate 201. The absorbing mat 213 may be made of an enduring material such as a nonwoven material, instead of rubber.

### EXAMPLE 5

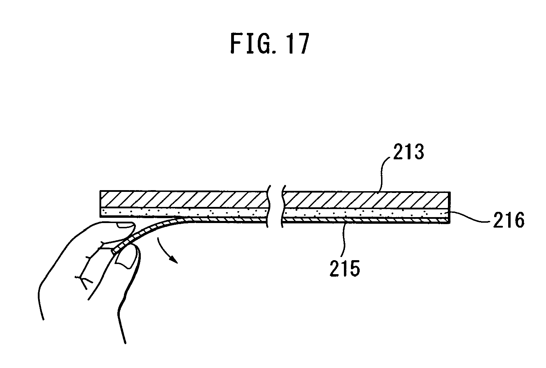

In Example 5, a pressure-sensitive adhesive layer 216 is applied in order to improve the adhesion. In the device of Example 3, the adhesive layer 216 with peelable paper 215 is disposed on the bottom face of the display plate 201 in advance. In the device of Example 4, the adhesive layer 216 with peelable paper 215 is disposed on the bottom face of the absorbing mat 213 in advance. As shown in Fig. 17, the peelable paper 215 is peeled off on site, and the device is adhered to a floor 301 by the adhesive layer 216. This Example corresponds with the fifteenth aspect of the present invention.

With the adhesive layer 216, the sign device 200 is fixed at a predetermined position on a floor in advance of screwing of the anchor bolts 212. Therefore, the misalignment of the sign device 200 can be prevented, and the sign device 200 does not move during screwing the anchor bolt 212. Consequently, the workability is improved.

When the sign device 200 is mounted on a wall or ceiling, the sign device 200 can be temporarily fixed on the wall or ceiling with the adhesive layer 216.

Furthermore, when the sign device 200 is temporarily used, for example, for indicating a temporary emergency exit, the sign device 200 is mounted at an arbitrary place with the adhesive layer 216 alone. Since the sign device 200 is not permanently fixed with the anchor bolt 212, the sign device 200 no longer required can be readily removed. In such use of the sign device 200, the display plate 201 and the mounting plate 207 and also the absorbing mat 213 when the absorbing mat 213 is used must be adhered with each other.

### EXAMPLE 6

In Example 6, as shown Fig. 13, the mounting plate 207 is provided with Braille 217 for indicating an evacuation route so that the visually impaired can safely escape. This Example corresponds with the seventeenth aspect of the present invention. The Braille 217 may be formed on the surface of the luminous paint layer 203 in addition to the mounting plate 207.

The arrow 204 on the surface of the luminous paint layer 203 can be formed by screen printing or spray coating. In Examples 2 and 3, LumiNova (NEMOTO & CO., LTD.) was used as a luminous material for the luminous paint layer 203. The characteristics are shown in Table 1.

**Table 2**

| Chemical composition | SrAl₂O₄:Eu,Dy |
|---|---|
| Color | Light Yellowish Green |
| Average particle size | 2-60 µm⁽⁶⁾ |
| Excitation wavelength | 200-450nm |
| Peak luminous wavelength | 520nm |
| Afterglow luminance(1) | ≒ 250mcd/m² |
| Afterglow time⁽²⁾ | >1,500min. |
| Excitation time⁽³⁾ | ~30min. |
| Light fastness⁽⁴⁾ | > 1,000hours |
| Chemical stability | Good |
| Specific gravity⁽⁵⁾ | 3.6 |

| | |
|---|---|
| (1) Afterglow luminance 5 min after 4 min of exposure at an illuminance of 200 lx using a standard light source D₆₅; (2) Time when the afterglow luminance after 4 min of exposure at an illuminance of 200 Ix using a standard light source D₆₅ is attenuated to 0.32 mcd/m²; (3) Time when saturated excitation is achieved by the exposure at an illuminance of 200 Ix using a standard light source D₆₅; (4) Accelerated light fastness test: Time when afterglow luminance after exposure at 300 W using a high-pressure mercury lamp is attenuated to 80% or less of the initial value; (5) Absolute specific gravity of pigment powder (6) Vary with each grade | |

## Claims

1. A fired product having a luminous function manufactured by:
adhering material-adapting glass frit to a surface of a ceramic material;
adhering coating glass frit to the surface of the material-adapting glass frit after drying of the material-adapting glass frit;
adhering luminous material particles having a particle size of 50 to 250 µm in one uniform layer to the coating glass frit layer before drying of the coating glass frit so that the upper portions of the luminous material particles are partly exposed from the coating glass frit;
alternately stacking coating glass frit and luminous material particles several times;
covering the topmost luminous material particles partly exposing from the coating glass frit by adhering coating glass frit;
printing an image portion on the surface of the coating glass frit after drying of the coating glass frit;
adhering adapting glass frit at a predetermined thickness to the coating glass frit having the printed image portion;
uniformly adhering protecting glass frit particles having a large particle size to the surface of the adapting glass frit; and
firing the adhered stack at high temperature,
wherein the material-adapting glass frit has a coefficient of thermal expansion of an intermediate value between those of the ceramic material and the luminous material particles, the coating glass frit has a coefficient of thermal expansion substantially the same as that of the luminous material particles, and the adapting glass frit has a coefficient of thermal expansion of an intermediate value between those of the luminous material particles and the protecting glass frit particles having a large particle size.

2. A fired product having a luminous function manufactured by:
adhering material-adapting glass frit to a surface of a metal plate;
adhering coating glass frit to the surface of the material-adapting glass frit after drying of the material-adapting glass frit;
adhering luminous material particles having a particle size of 50 to 250 µm in one uniform layer to the coating glass frit layer before drying of the coating glass frit so that the upper portions of the luminous material particles are partly exposed from the coating glass frit;
alternately stacking coating glass frit and luminous material particles several times;
covering the topmost luminous material particles partly exposing from the coating glass frit by adhering coating glass frit;
printing an image portion on the surface of the coating glass frit after drying of the coating glass frit;
adhering adapting glass frit at a predetermined thickness to the coating glass frit having the printed image portion;
uniformly adhering protecting glass frit particles having a large particle size to the surface of the adapting glass frit; and
firing the adhered stack at high temperature,
wherein the material-adapting glass frit has a coefficient of thermal expansion of an intermediate value between those of the metal plate and the luminous material particles, the coating glass frit has a coefficient of thermal expansion substantially the same as that of the luminous material particles, and the adapting glass frit has a coefficient of thermal expansion of an intermediate value between those of the luminous material particles and the protecting glass frit particles having a large particle size.

3. The fired product having a luminous function according to claim 1 or 2, wherein the image portion comprises an evacuation route guiding sign for indicating an escape route.

4. An evacuation route guiding sign device comprising;
a guiding sign-board having a surface including a guiding sign image formed with a fired product having a luminous function in the central area; and
a mounting plate for retrofitting the guiding sign-board on a floor, wherein the mounting plate has a concave portion where the guiding sign-board is pressed in, a quadrangular frame surrounding the concave portion, a slope descending toward the edge from the periphery of the frame, and perforated bolt-holes for anchor bolts formed at least four places of the frame.

5. The evacuation route guiding sign device according to claim 4, wherein the frame of the mounting plate has a chevron-shaped side; and the apex of the chevron is in the same direction as that of an arrow when the guiding sign image includes the arrow.

6. The evacuation route guiding sign device according to claim 4, wherein the frame of the mounting plate has two chevron-shaped sides opposing each other.

7. The evacuation route guiding sign device according to claim 4, wherein the mounting plate has a rough bottom face.

8. The evacuation route guiding sign device according to claim 4, wherein the concave portion of the mounting plate has a window.

9. The evacuation route guiding sign device according to claim 4, wherein the surface of the mounting plate or of the fired-product having a luminous function is provided with Braille or a raised symbol for indicating a direction of an escape route.

10. The evacuation route guiding sign device according to claim 8, wherein the entire mounting plate is formed by press working of a stainless steel plate, and then the holes for anchor bolts and the window of the concave portion are formed.

11. An evacuation route guiding sign device comprising:
a fired-product plate including the top face provided with a fired-product layer having a luminous function, a first frame surrounding the fired-product layer, and a character, symbol, sign, or a combination thereof provided on or in the top surface of the fired-product layer;
a plate-mounting frame having a second frame raised upward and an opening surrounded by the second frame, wherein the fired-product plate is incorporated in the plate-mounting frame by inserting the fired-product plate in the plate-mounting frame from the bottom, exposing the fired-product layer from the opening, and bringing the first frame surrounding the fired-product layer into contact with the second frame; and
an anchor bolt for fixing the plate-mounting frame to a structure such as floor and wall via anchor-bolt holes perforated in the second frame of the plate-mounting frame and in the first frame of the fired-product plate.

12. The evacuation route guiding sign device according to claim 11, further comprising:
an absorbing mat provided on the bottom face of the fired-product plate, wherein the plate-mounting frame is fixed to a face to be mounted with the device so that the absorbing mat is interposed between the fired-product plate and the face to be mounted with the device.

13. The evacuation route guiding sign device according to claim 11, wherein the fired-product plate and the plate-mounting frame are in one unit by previously adhering the surface of the first frame of the fired-product plate and the surface of the second frame of the plate-mounting frame with an adhesive.

14. The evacuation route guiding sign device according to claim 12, wherein the absorbing mat and the fired-product plate are in one unit by adhering the absorbing mat and the bottom face of the fired-product plate with an adhesive.

15. The evacuation route guiding sign device according to claim 14, wherein the bottom face of the absorbing mat is provided with a pressure-sensitive adhesive layer with peelable paper.

16. The evacuation route guiding sign device according to claim 11, wherein the plate-mounting frame has an arrow-shaped side for indicating the direction of an escape route.

17. The evacuation route guiding sign device according to claim 11, wherein the surface of the plate-mounting frame or of the fired-product layer is provided with Braille for indicating the direction of an escape route so that the visually impaired safely escapes according to the indication of the Braille.
